# EUROPEAN PATENT APPLICATION

(11) **EP 4 516 110 A1**
(43) Date of publication of application: **05.03.2025**
(21) Application number: 23796377.2
(22) Date of filing: 25.04.2023
(51) Int. Cl.: A23J 3/00, A23D 9/00, A23J 3/14, A23L 5/00, A23L 13/00, A23L 29/10

(54) **MEAT-LIKE FOOD PRODUCT MODIFIER AND MEAT-LIKE FOOD PRODUCT**

(30) Priority: 26.04.2022 JP 2022072542
(71) Applicant: Mitsubishi Chemical Corporation, Tokyo 100-8251 (JP)
(72) Inventor: ARIMA, Satoshi, Tokyo 100-8251 (JP)
(74) Representative: Ter Meer Steinmeister & Partner
(86) International application number: PCT/JP2023/016286
(87) International publication number: WO 2023/210637

(57) **Abstract**

A modifier for a meat-like food comprising: a plant oil and fat having a property of being in a liquid state at 10°C, and a fatty acid ester as an emulsifier, wherein the emulsifier has a crystal size of 0.1 to 250 µm. A modifier for a meat-like food comprising: a plant oil and fat having a property of being in a liquid state at 10°C, and a fatty acid ester as an mulsifier,wherein the modifier has a viscosity at 15°C of 1000 to 30000 mPa·s. A meat-like food containing the modifier for a meat-like food.

## Description

### Technical Field

The present invention relates to a modifier for a meat-like food and a meat-like food containing the modifier.

### Background Art

In recent years, there has been a demand for meat-like foods that are produced only from plant-derived raw materials without using livestock meat, and have the pleasant flavor and texture equivalent to those of livestock meat. To meet this demand, various modifiers have been proposed for imparting a flavor and texture equivalent to those of livestock meat to meat-like foods produced only from plant-derived raw materials without using livestock meat.

For example, Patent Literature 1 proposes a technique for producing a livestock meat-like processed food with juiciness. In this technique, rapeseed oil is O/W-emulsified using an isolated soy protein and methylcellulose to form emulsion curd, the emulsion curd is added to a livestock meat-like processed food dough at a given particle size and dispersed, and the dough is shaped and heated, then frozen and thawed to produce the livestock meat-like processed food with juiciness after thawing.

Patent Literature 2 proposes a technique for imparting a meaty granular texture and juiciness to ground meat or a ground meat-like processed food by blending a porous material having a particle size that passes through a sieve having a mesh size of 4000 µm or less, in an emulsion containing a powdered plant protein.

Patent Literature 3 proposes a technique for imparting ease of breaking apart and juiciness when chewed to a processed food by using an oil and/or fat composition for a processed food, the composition containing an edible oil and fat with a solid fat content in a predetermined range and further having a predetermined size, in a processed food containing a plant protein.

### Citation List

### Patent Literature

Patent Literature 1: JP 2018-029565 A
Patent Literature 2: JP 2021-048807 A
Patent Literature 3: WO 2020/004058

### Summary of Invention

### Technical Problem

Meat-like foods do not contain animal-derived raw materials, such as livestock meat and animal oil and/or fat. The absence of the animal-derived raw materials makes it very difficult to give meat-like foods the texture and juiciness equivalent to those of livestock meat. Thus, even such techniques described above have not been able to provide a meat-like food excellent in texture and juiciness.

An object of the present invention is to provide a modifier for a meat-like food, the modifier being easily prepared and capable of imparting a texture (e.g., tenderness) and juiciness (e.g., a moist texture) equivalent to those of animal meat, such as livestock meat or fish meat, to meat-like foods containing a plant protein and containing little or no animal-derived raw material; and a meat-like food containing the modifier for a meat-like food and excellent in texture and juiciness.

### Solution to Problem

The present inventor has found that the above object can be achieved with a modifier in which fine crystals of a specific emulsifier are dispersed in a plant oil and fat in a liquid state or a modifier having a predetermined viscosity and containing a specific emulsifier in a plant oil and fat in a liquid state.

The gist of the present invention is the following [1] to [9].
[1] A modifier for a meat-like food comprising:
   a plant oil and fat having a property of being in a liquid state at 10°C, and a fatty acid ester as an emulsifier,
   wherein the emulsifier has a crystal size of 0.1 to 250 µm.
[2] A modifier for a meat-like food comprising:
   a plant oil and fat having a property of being in a liquid state at 10°C, and a fatty acid ester as an emulsifier,
   wherein the modifier has a viscosity at 15°C of 1000 to 30000 mPa·s.
[3] The modifier for a meat-like food according to [1] or [2], wherein the fatty acid ester contains a glycerol fatty acid ester and a fatty acid ester of a polyhydric alcohol other than glycerin.
[4] The modifier for a meat-like food according to [3], wherein the fatty acid ester contains the glycerol fatty acid ester and the fatty acid ester of a polyhydric alcohol other than glycerin at a weight ratio of 10:90 to 90: 10.
[5] The modifier for a meat-like food according to any one of [1] to [4], wherein the modifier further contains a phospholipid.
[6] The modifier for a meat-like food according to any one of [1] to [5], wherein the meat-like food contains no animal protein or contains an animal protein at a weight ratio of 1.0 or less with respect to a plant protein.
[7] The modifier for a meat-like food according to any one of [1] to [6], wherein the modifier is a texture improver for a meat-like food.
[8] The modifier for a meat-like food according to any one of [1] to [6], wherein the modifier is a juiciness improver for a meat-like food.
[9] A meat-like food containing the modifier for a meat-like food described according to any one of [1] to [8].

The gist of the present invention is also the following <1> to <9>.
<1> A modifier for a plant protein containing: an oil and fat having a property of being in a liquid state at 10°C, and a fatty acid ester as an emulsifier,
   wherein the emulsifier has a crystal size of 0.01 to 1000 µm.
<2> The modifier for a plant protein according to <1>, wherein the modifier has a viscosity at a temperature condition of 15°C of 1000 to 30000 mPa·s.
<3> A modifier for a plant protein containing: an oil and fat having a property of being in a liquid state at 10°C, and a fatty acid ester as an emulsifier,
   wherein the modifier has a viscosity at a temperature condition of 15°C of 1000 to 30000 mPa·s.
<4> The modifier for a plant protein according to <3>, wherein the emulsifier has a crystal size of 0.01 to 1000 µm.
<5> The modifier for a plant protein according to any one of <1> to <4>, wherein the modifier contains 2.5 to 30 wt.% of the emulsifier.
<6> The modifier for a plant protein according to any one of <1> to <5>, wherein a content weight ratio of unsaturated oil and fat to saturated oil and fat in the oil and fat having a property of being in a liquid state at 10°C is 2 to 100.
<7> A food containing the modifier for a plant protein according to any one of <1> to <6>.
<8> A livestock meat-like food containing the modifier for a plant protein according to any one of <1> to <6>.
<9> A livestock meat-like food containing the modifier for a plant protein according to any one of <1> to <6> and containing no livestock meat.

The gist of the present invention is also the following [10] to [17].
[10] A method for producing a meat-like food including a step of adding a modifier containing a plant oil and fat having a property of being in a liquid state at 10°C, and a fatty acid ester as an emulsifier,
   wherein the emulsifier has a crystal size of 0.1 to 250 µm.
[11] A method for producing a meat-like food including a step of adding a modifier containing a plant oil and fat having a property of being in a liquid state at 10°C, and a fatty acid ester as an emulsifier,
   wherein the modifier has a viscosity at 15°C of 1000 to 30000 mPa·s.
[12] The method for producing a meat-like food according to [10] or [11], wherein the fatty acid ester contains a glycerol fatty acid ester and a fatty acid ester of a polyhydric alcohol other than glycerin.
[13] The method for producing a meat-like food according to [12], wherein the fatty acid ester contains the glycerol fatty acid ester and the fatty acid ester of a polyhydric alcohol other than glycerin at a weight ratio of 10:90 to 90: 10.
[14] The method for producing a meat-like food according to any one of [10] to [13], wherein the modifier further contains a phospholipid.
[15] The method for producing a meat-like food according to any one of [10] to [14], wherein the meat-like food contains no animal protein or contains an animal protein at a weight ratio of 1.0 or less with respect to a plant protein.
[16] A method for improving a texture of a meat-like food by the modifier for a meat-like food according to any one of [1] to [8].
[17] A method for improving juiciness of a meat-like food by the modifier for a meat-like food according to any one of [1] to [8].
   The gist of the present invention is also the following [18] to [23].
[18] Use of a modifier for producing a meat-like food, wherein the modifier contains a plant oil and fat having a property of being in a liquid state at 10°C, and a fatty acid ester as an emulsifier, and
   wherein the emulsifier has a crystal size of 0.1 to 250 µm.
[19] Use of a modifier for producing a meat-like food, wherein the modifier contains a plant oil and fat having a property of being in a liquid state at 10°C, and a fatty acid ester as an emulsifier, and
   wherein the modifier has a viscosity at 15°C of 1000 to 30000 mPa·s.
[20] The use of a modifier according to [18] or [19], wherein the fatty acid ester contains a glycerol fatty acid ester and a fatty acid ester of a polyhydric alcohol other than glycerin.
[21] The use of a modifier according to [20], wherein the fatty acid ester contains the glycerol fatty acid ester and the fatty acid ester of a polyhydric alcohol other than glycerin at a weight ratio of 10:90 to 90: 10.
[22] The use of a modifier according to any one of [18] to [21], wherein the modifier further contains a phospholipid.
[23] The use of a modifier according to any one of [18] to [22], wherein the meat-like food contains no animal protein or contains an animal protein at a weight ratio of 1.0 or less with respect to a plant protein.

### Advantageous Effects of Invention

The modifier of the present invention can be easily prepared and is excellent in productivity. A meat-like food excellent in texture and juiciness equivalent to those of animal meat can be achieved by blending the modifier of the present invention to a food, particularly a food containing a plant protein and containing little or no animal-derived raw material, especially a meat-like food. That is, the modifier of the present invention is particularly suitable as a modifier for a plant protein. In addition, the modifier of the present invention is suitable as a modifier for a meat-like food.

### Description of Embodiments

Hereinafter, embodiments of the present invention will be described in detail. The following descriptions are representative examples of embodiments of the present invention, and the present invention is not limited to these contents.

In the present invention, "to" is used to mean that numerical values described before and after "to" are included as a lower limit value and an upper limit value.

### Brief Description of Drawings

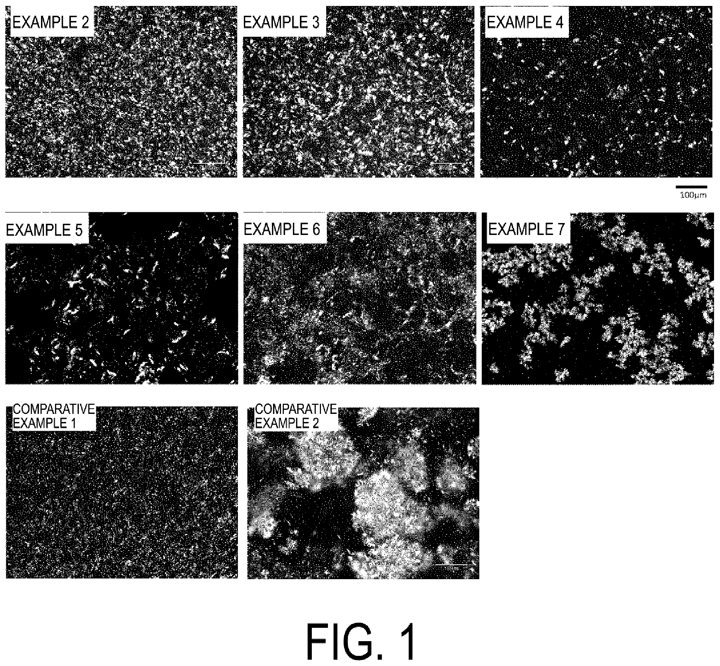

FIG. 1 is polarizing microscope images when crystalline states of emulsifiers or a plant oil and fat were observed for modifiers for a meat-like food prepared in Examples 2 to 7 and Comparative Example 2 and a plant oil and fat used in Comparative Example 1.

### Modifier

In one embodiment, a modifier of the present invention (which may be hereinafter referred to as "the modifier for a meat-like food of the present invention") is characterized in that the modifier contains an oil and fat having a property of being in a liquid state at 10°C (which may be hereinafter referred to as a "liquid oil and fat"), and a fatty acid ester as an emulsifier, wherein the emulsifier has a crystal size in a predetermined range.

In one embodiment, the modifier of the present invention is characterized in that the modifier contains an oil and fat having a property of being in a liquid state at 10°C, and a fatty acid ester as an emulsifier, wherein the modifier has a viscosity at 15°C of 1000 to 30000 mPa·s.

Preferably, the modifier of the present invention contains a liquid plant oil and fat, and a fatty acid ester as an emulsifier, and the emulsifier has a crystal size in a predetermined range, and a viscosity at 15°C of 1000 to 30000 mPa·s.

### Mechanism

An emulsifier, such as a fatty acid ester, is present in a crystalline state in a liquid plant oil and fat, and the liquid plant oil and fat easily enters a network structure of crystals of the emulsifier, such as the fatty acid ester.

In producing a meat-like food, the smaller the crystal size of the emulsifier, such as a fatty acid ester, into which the liquid plant oil and fat is thus incorporated, the more easily the modifier is mixed with plant-based meat or the like. That is, when the crystal size of the fatty acid ester is too large, the fatty acid ester itself would be bulky and difficult to be mixed with plant-based meat or the like. The structure size of meat, such as plant-based meat, is usually about several hundred micrometers, and thus a modifier containing an emulsifier, such as a fatty acid ester, having a crystal size of 250 µm or less is particularly easily mixed.

On the other hand, when the crystal size of the fatty acid ester is too small, it would be difficult for the liquid plant oil and fat to enter the network structure of the crystals.

In one embodiment of the present invention, the emulsifier, such as a fatty acid ester, has a crystal size that facilitates entry of the liquid plant oil and fat into the network structure of the crystals of the emulsifier, such as a fatty acid ester, and mixing of the modifier with the plant-based meat or the like.

In addition, in producing the modifier of the present invention, when the fatty acid ester as the emulsifier is left in the liquid plant oil and fat, the crystal size of the fatty acid ester becomes as large as several millimeters. However, carrying out rapid cooling or the like during the production of the modifier reduces the crystal size, and the modifier has a high viscosity.

In one embodiment of the present invention, the predetermined viscosity of the modifier at 15°C corresponds to the crystal size described above that facilitates entry of the liquid plant oil and fat into the network structure of the crystals of the emulsifier, such as a fatty acid ester, and mixing of the modifier with the plant-based meat or the like.

The modifier of the present invention is thus easily mixed with the plant-based meat or the like and can uniformly and effectively exhibit its effect as a modifier, due to the liquid plant oil and fat having entered the network structure of the crystals of the emulsifier, such as a fatty acid ester.

The crystal of the emulsifier, such as a fatty acid ester, in the modifier undergoes melting due to heating in production of the meat-like food. It is construed that the presence of the modifier of the present invention changes the thermally denatured state of the protein and improves the texture and juiciness.

The modifier of the present invention is easily mixed with a plant-based meat or the like and uniformly and effectively affects the thermally denatured state of the plant-based meat or the like, and this can improve the texture and juiciness.

### Liquid Oil and Fat

The liquid oil and fat used in the present invention is a liquid oil and fat having a property of being in a liquid state at 10°C. The oil and fat having a property of being in a liquid state at 10°C mixes well with a plant protein in the case of preparing a processed food containing the plant protein and can sufficiently impart juiciness.

The liquid oil and fat used in the present invention is an oil and fat having a property of being in a liquid state at 10°C, which is not particularly limited as long as it is applicable to a food. The liquid oil and fat used in the present invention is preferably a plant oil and fat. That is, the liquid oil and fat (which may be hereinafter referred to as "the liquid oil and fat" or "the liquid plant oil and fat") used in the present invention is preferably a liquid plant oil and fat.

Examples of the liquid oil and fat used in the modifier of the present invention include, but are not limited to, soybean oil, rapeseed oil, corn oil (maize oil), (roasted) sesame oil, sesame salad oil, shiso perilla oil, linseed oil, peanut oil, safflower oil, sunflower oil, castor oil, cottonseed oil, grapeseed oil, macadamia nut oil, hazelnut oil, pumpkin seed oil, walnut oil, camellia oil, tea seed oil, perilla frutescens oil, borage oil, olive oil, rice bran oil (rice oil), wheat germ oil, cocoa butter, and a mixed oil of these, fractionated oil, hydrogenated oil, transesterified oil, and the like. One of the oils and fats may be used individually or two or more in combination.

The liquid oil and fat used in the present invention has good fluidity of the oil and fat, and in a case where a processed food containing a plant protein is prepared, the plant protein and the oil and fat are very miscible, and thus, juiciness tends to be effectively imparted. From this viewpoint, a content weight ratio of unsaturated oil and fat to saturated oil and fat in the liquid oil and fat used in the present invention is preferably 2 or more, more preferably 3 or more, and even more preferably 5 or more, and on the other hand preferably 100 or less, more preferably 50 or less, and even more preferably 30 or less.

The above upper and lower limits can be freely combined. For example, in the modifier of the present invention, the content weight ratio of unsaturated oil and fat to saturated oil and fat in the liquid oil and fat is preferably 2 to 100, more preferably 2 to 50, even more preferably 3 to 50, and particularly preferably from 5 to 30.

Examples of the liquid oil and fat satisfying such a content weight ratio of unsaturated oil and fat to saturated oil and fat include rapeseed oil (15.85), soybean oil (6.00), maize oil (6.70), rice oil (4.41), sunflower oil (13.82), sesame oil (5.59), cottonseed oil (3.51), linseed oil (9.63), castor oil (4.50), and the like. Here, the numerical values in the parentheses represent the content weight ratio of unsaturated oil and fat to saturated oil and fat.

On the other hand, palm oil (0.97), palm olein (1.45), palm kernel oil (0.24), and coconut oil (0.10) do not satisfy the above suitable range.

### Emulsifier

The modifier of the present invention contains a fatty acid ester as an emulsifier.

For the fatty acid ester, a fatty acid ester usually used as a nonionic emulsifier can be used. Examples of such a fatty acid ester include a glycerol fatty acid ester, such as a monoglycerol fatty acid ester, a polyglycerol fatty acid ester, a glycerol organic acid fatty acid ester, and the like; and a fatty acid ester of a polyhydric alcohol other than glycerin, such as a sorbitan fatty acid ester, a sucrose fatty acid ester, a propylene glycol fatty acid ester, an ethylene glycol fatty acid ester, and the like.

The number of carbon atoms of the fatty acid of the fatty acid ester is preferably 10 or more, more preferably 12 or more, even more preferably 14 or more, and particularly preferably 16 or more, and on the other hand, preferably 24 or less, more preferably 22 or less, even more preferably 20 or less, and particularly preferably 18 or less. The fatty acid ester of the fatty acid having the number of carbon atoms in the above range tends to produce a good crystal size of the resulting emulsifier.

The above upper and lower limits can be freely combined. For example, number of carbon atoms of the fatty acid of the above fatty acid ester is preferably 10 to 24, more preferably 12 to 22, even more preferably 14 to 20, and particularly preferably 16 to 18.

Only one of these fatty acid esters may be used, or two or more of them mixed in any combination and ratio may be used. In particular, it is preferable to use a glycerol fatty acid ester and a fatty acid ester of a polyhydric alcohol other than glycerin in combination because the crystal size is unlikely to increase due to coalescence of crystals. Furthermore, it is preferable to use a glycerol fatty acid ester of a fatty acid having 16 to 18 carbons and a fatty acid ester of a polyhydric alcohol other than glycerin, which has a fatty acid having 16 to 18 carbons, in combination.

When a glycerol fatty acid ester and a fatty acid ester of a polyhydric alcohol other than glycerin are used in combination, the composition ratio in terms of a ratio (weight ratio) of a glycerol fatty acid ester to a fatty acid ester of a polyhydric alcohol other than glycerin is preferably 10/90 or more, more preferably 20/80 or more, and even more preferably 49/51 or more, and preferably 90/10 or less, more preferably 80/20 or less, and even more preferably 30/70 or less. When the composition ratio is in the above range, it is possible to maintain the crystal of the emulsifier in a fine state, and in the case of preparing a processed food containing a plant protein, the plant protein and an oil and fat are very miscible and thus juiciness tends to be effectively imparted.

The above upper and lower limits can be freely combined. For example, the ratio (weight ratio) of the glycerol fatty acid ester to the fatty acid ester of a polyhydric alcohol other than glycerin is preferably 10/90 to 90/10, more preferably 20/80 to 80/20, and even more preferably 49/51 to 30/70.

In the modifier of the present invention, the content of the emulsifier is preferably high from the viewpoint that when a processed food containing a plant protein is prepared, the plant protein tends to be efficiently impregnated with an oil and fat. Specifically, the content of the emulsifier is preferably 2.5 wt.% or more, more preferably 5 wt.% or more, and even more preferably 7.5 wt.% or more. On the other hand, the content of the emulsifier is preferably low from the viewpoint of preventing the deterioration of the flavor of a meat-like food blended with the modifier of the present invention. Specifically, the content of the emulsifier is preferably 30 wt.% or less, more preferably 20 wt.% or less, and even more preferably 15 wt.% or less.

The above upper and lower limits can be freely combined. For example, in the modifier of the present invention, the content of the emulsifier is preferably 2.5 to 30 wt.%, more preferably 5 to 20 wt.%, and even more preferably 7.5 to 15 wt.%.

### Crystal Size of Emulsifier

In the modifier of the present invention, the emulsifier is contained in an amount greater than the solubility in an oil and fat and thus is present as a crystal in the liquid oil and fat.

The crystal size of the emulsifier in the modifier of the present invention is preferably large from the viewpoint of ability to form a dense network structure and include the contained liquid oil and fat in the network, thereby efficiently impregnating the plant protein with the oil and fat. Specifically, the crystal size of the emulsifier is preferably 0.01 µm or more, more preferably 0.1 µm or more, even more preferably 1 µm or more, particularly preferably 3 µm or more, and most preferably 5 µm or more. On the other hand, the crystal size of the emulsifier is preferably small from the viewpoint of facilitating efficient impregnation of the oil and fat into the plant protein by forming a network structure. Specifically, the crystal size of the emulsifier is preferably 1000 µm or less, more preferably 500 µm or less, even more preferably 250 µm or less, particularly preferably 130 µm or less, especially preferably 115 µm or less, and most preferably 100 µm or less.

The above upper and lower limits can be freely combined. For example, the crystal size of the emulsifier in the modifier of the present invention is preferably 0.01 to 1000 µm, more preferably 0.1 to 500 µm, even more preferably 0.1 to 250 µm, particularly preferably 0.1 to 130 µm, and most preferably 1 to 100 µm.

In the present invention, the crystal size of the emulsifier is a value determined by the following scheme, as described in the section of Examples described later: using a polarizing microscope, the modifier of the present invention is observed, and the sizes of all the crystals of the emulsifier in the visual field are measured. The method for measuring the crystal size is described below.

The crystalline state of the emulsifier is observed using a polarizing microscope (Olympus BX-53) under crossed Nicols conditions. Images are acquired using a microscope digital camera (Olympus DP74). The lengths of the long sides of 20 or more crystals in the captured image are measured using image analysis software (WinROOF 2015), and the minimum, maximum, and mean values are calculated.

Examples of a method for adjusting the crystal size of the emulsifier to the above range include a method of adjusting by appropriately combining conditions, such as (1) to (5) below, in producing the modifier of the present invention.
(1) Using a fatty acid ester as an emulsifier.
(2) Adjusting the temperature during preparation of the modifier.
(3) Adjusting the storage temperature after preparation of the modifier.
(4) Using a nonionic emulsifier other than the fatty acid ester in combination.
(5) Adjusting the concentration of the emulsifier.

### Additional Component

The modifier of the present invention may contain, in addition to the liquid oil and fat and the fatty acid ester as an emulsifier, an additional component as necessary as long as the object of the present invention is not impaired.

Examples of the additional component that can be contained in the modifier of the present invention include an emulsifier other than a fatty acid ester, a pH adjuster (such as hydrochloric acid, lactic acid, citric acid, acetic acid, calcium hydroxide, sodium hydroxide, sodium carbonate, sodium bicarbonate, sodium acetate, and the like), salts (such as sodium chloride, a phosphate salt, a glutamate salt, a citrate salt, a gluconate salt, a carbonate salt, and the like), a protein (such as milk protein, egg white, wheat protein, and the like), an amino acid, an enzyme (such as transglutaminase, protease, and the like), a glucide, a dietary fiber, a flavoring agent, a pigment, an antioxidant, and the like. Only one of these may be used, or two or more may be used.

In particular, in the case of preparing a processed food containing a plant protein using, as an emulsifier, a phospholipid, such as lecithin, in combination with a fatty acid ester, the oil and fat can be more efficiently impregnated into the plant protein, and thus, juiciness tends to be effectively imparted. In this case, the phospholipid, such as lecithin, is preferably used in a ratio of 0.01 to 10 wt.%, particularly 0.1 to 5 wt.% relative to the fatty acid ester.

In the modifier of the present invention, the content of the liquid oil and fat is the remainder of the amount of the emulsifier and the additional component described above, and the content of the liquid oil and fat in the modifier of the present invention is preferably 68.00 wt.% or more, and more preferably 84.00 wt.% or more, and preferably 97.49 wt.% or less, and more preferably 94.90 wt.% or less.

The above upper and lower limits can be freely combined. For example, in the modifier of the present invention, the content of the liquid oil and fat is preferably 68.00 to 97.49 wt.% and more preferably 84.00 to 94.90 wt.%.

### Viscosity at 15°C

The modifier of the present invention has a viscosity at 15°C of preferably 1000 mPa·s or more, more preferably 2000 mPa·s or more, even more preferably 3000 mPa·s or more, and particularly preferably 5000 mPa·s or more, and on the other hand, preferably 30000 mPa·s or less, more preferably 20000 mPa·s or less, even more preferably 15000 mPa·s or less, and particularly preferably 10000 mPa·s or less. When the viscosity of the modifier is within the above range, the modifier has excellent handleability at the time of preparation and use (at the time of blending into a food) and can effectively exhibit the modifying effect by the modifier of the present invention.

The above upper and lower limits can be freely combined. For example, viscosity at 15°C of the modifier of the present invention is preferably 1000 to 30000 mPa·s, more preferably 2000 to 20000 mPa·s, even more preferably 3000 to 15000 mPa·s, and particularly preferably 5000 to 10000 mPa·s.

To adjust the viscosity of the modifier to the above range, a condition, such as (1) to (5) below, is appropriately adopted in producing the modifier of the present invention.
(1) Using a fatty acid ester as an emulsifier.
(2) Adjusting the temperature during preparation of the modifier.
(3) Adjusting the storage temperature after preparation of the modifier.
(4) Using a nonionic emulsifier other than the fatty acid ester in combination.
(5) Adjusting the concentration of the emulsifier.

### Method for Preparing Modifier

The method for preparing the modifier of the present invention is not particularly limited, but examples include a method in which a liquid plant oil and fat is heated to about 70 to 90°C, a fatty acid ester as an emulsifier and an additional component used as necessary are added to this and the mixture is stirred to completely dissolve these, and then the resulting solution is rapidly cooled to a temperature of about 20 to 40°C.

Here, "rapidly cooled" means being cooled at a temperature decrease rate of 1.0°C/min or more.

This tends to cause of the fatty acid ester once dissolved in the liquid plant oil and fat to precipitate into an appropriate crystal size, making it possible efficiently obtain the modifier of the present invention.

### Method for Storing Modifier

To maintain the suitable crystal size and viscosity described above, the modifier of the present invention is preferably stored at a temperature of 25°C or lower, for example, 0 to 25°C.

### Application

The modifier of the present invention can be used as a texture improver or a juiciness improver for various foods.

The content of the modifier of the present invention in the food to which the modifier of the present invention is applied is not particularly limited, and the modifier is blended to the extent that the modifying effect by the modifier of the present invention is effectively exhibited according to the type of food.

The food containing the modifier of the present invention is not particularly limited, and examples include a meat-like food, a processed seafood, a milk-like food, and the like.

The modifier of the present invention is effective, particularly in meat-like foods, in imparting a texture and juiciness equivalent to those of animal meat, such as livestock meat, and thus is suitably used particularly for meat-like foods. That is, the modifier of the present invention can be used in the production of meat-like foods. In addition, a method for improving the texture of a meat-like food can be provided by the modifier of the present invention. A method for improving the juiciness of a meat-like food can be provided by the modifier of the present invention.

### Food

A food of the present invention contains the modifier of the present invention. In addition, a meat-like food of the present invention contains the modifier for a meat-like food of the present invention.

The meat-like food is a food that contains a plant protein, but contains no or very little animal meat blended in, and the meat-like food has a taste, flavor, and texture equivalent to those of animal meat.

In the present invention, "animal meat" is meat of a vertebrate and refers to animal meat in a broad sense including meat of land mammals, such as beef, pork, horse meat, mutton, goat meat, venison, wild boar meat, rabbit meat, and the like; in addition, meat of poultry (such as a chicken, a domestic duck, a turkey, and the like); furthermore, meat of marine mammals, such as a whale, and the like; meat of fish; meat of amphibians; and also meat of reptiles.

Examples of the plant protein contained in the meat-like food include those that can be used as a substitute for meat having a protein content of 40 wt.% or more based on a dry weight, and specific examples include a legume protein, such as soy protein, lentil protein, chickpea protein, pea protein, and the like; and wheat protein, and the like. From the viewpoint of a texture imparted to the meat-like food, the plant protein is preferably a legume protein and particularly preferably soy protein. Only one of these plant proteins may be used, or two or more of them may be used in any combination and ratio.

In addition, examples of the form of plant protein and the form of animal meat in the case of containing the animal meat include, but are not limited to, a minced form, a shredded form, a thinly sliced form, a sliced form, a chunked form, a block form, a diced form, a shredded form, and the like, and the form is preferably a minced form from the viewpoint of ease of disintegration in the mouth when the processed food is chewed and being able to imparting juiciness. Examples of the minced soy protein include granular soy protein.

The content of the modifier of the present invention in the meat-like food is preferably a content such that the weight ratio of the plant protein to the modifier of the present invention in the meat-like food is in the range of 20:80 to 90: 10 and preferably in the range of 50:50 to 80:20 to effectively achieve the modifying effect by the modifier of the present invention.

Examples of the meat-like food include livestock meat-like foods and fish meat-like foods, and specific examples include, but are not limited to, deep-fried foods, hamburgers, fried cakes of minced meat, meat dumplings, croquettes, gyoza, shumai, Chinese steamed buns, sausages (livestock meat sausages and fish meat sausages), meatballs, tsukune meatballs, meatloafs, egg rolls, meat omelets, stuffed cabbage rolls, boiled pouches of fried tofu (drawstring bag like), foods stuffed with meat, samosas, xiaolongbao, and the like.

The meat-like food can be blended with a seasoning of various types, such as sugar, salt, soy sauce, and the like; a powdered vegetable; emulsion curd; yeast; and the like in addition to the plant protein and the modifier of the present invention according to the type of meat-like food.

The modifier of the present invention is useful for these animal meat substitute foods. The meat-like food to which the modifier of the present invention is applied preferably contains no animal protein, or in the case of containing an animal protein, the weight ratio of an animal protein to a plant protein is preferably 1.0 or less. The weight ratio of an animal protein to a plant protein is more preferably 0.2 or less and even more preferably 0.1 or less.

From the viewpoint of more effectively exhibiting the modifying effect by the modifier of the present invention, the content of an animal protein in the meat-like food to which the modifier of the present invention is applied is preferably 0%, that is, the meat-like food to which the modifier of the present invention is applied preferably contains no animal protein.

The method for producing the meat-like food of the present invention is not particularly limited, and the meat-like food can be produced according to a usual method according to the type of meat-like food.

One example is a method in which a plant protein and the modifier of the present invention, as well as a seasoning of various types, a powdered vegetable, and an additional material that are blended as necessary are uniformly kneaded with water, the resulting dough is formed into a given shape, and the shaped product undergoes heat treatment.

The shaped product may contain a food material other than the dough, for example, skin of gyoza, shumai, egg rolls, Chinese steamed buns, or the like; a vegetable, such as green pepper, cabbage or the like; a coating material, such as batter, breader, breadcrumbs or the like; fried tofu; or casing of sausage, and the like. From the viewpoint of further increasing the juiciness of the meat-like food, the shaped product includes the dough preferably in a state where a food material other than the dough covers the whole or a part of the dough.

The meat-like food of the present invention is preferably produced by adding the modifier of the present invention to raw materials of the meat-like food. That is, the method for producing a meat-like food of the present invention preferably includes a step of adding the modifier of the present invention.

### Examples

Hereinafter, the present invention will be more specifically described with reference to Examples. The present invention is not limited to the following Examples as long as it does not depart from the gist of the present invention.

In the following Examples and Comparative Examples, the crystal sizes of emulsifiers of prepared modifiers, a solid plant oil and fat, and rapeseed oil were measured using a polarizing microscope (BX-53 manufactured by Olympus Corporation). In addition, the viscosity of a prepared modifier was measured using a dynamic viscoelasticity measuring device (HAAKE RheoStress 600) at a temperature condition of 15°C with a cone plate having ϕ 60 mm and 1°and a gap set to 0.052 mm, and the maximum viscosity in a measurement time of 3 minutes was determined.

### Example 1

### Preparation of Modifier

A modifier was prepared in the following manner in the blending proportions shown in Table 1 below.

A rapeseed oil (content weight ratio of unsaturated oil and fat to saturated oil and fat: 15.85) was heated to 80°C or higher, emulsifiers (a monoglycerol fatty acid ester (fatty acid having 18 carbons) and a propylene glycol fatty acid ester (fatty acid having 18 carbons)) and lecithin were added, and the mixture was stirred to completely dissolve these raw materials.

The resulting solution was rapidly cooled to 40°C at 2.0°C/min with stirring to obtain a modifier for a meat-like food of the present invention.

The crystal size and viscosity of the emulsifier of the obtained modifier for a meat-like food were measured. The results are shown in Table 3.

### [Table 1]

**Table 1**

| Raw material name | Blending proportion (wt.%) |
|---|---|
| Rapeseed oil | 89.8 |
| Monoglycerol fatty acid ester | 4 |
| Propylene glycol fatty acid ester | 6 |
| Lecithin | 0.2 |

### Preparation of Food

A meat-like processed food containing a soy protein was prepared in the following manner in the blending proportions shown in Table 2 below using the modifier for a meat-like food produced above.

First, an onion powder, a heavy soy sauce, a superior white sugar, a yeast extract, a common salt, emulsion curd, and the above modifier for a meat-like food were uniformly stirred and mixed using a stirrer (KM300 manufactured by Aicohsha Mfg. Co., Ltd.). A granular soy protein rehydrated with water for 30 minutes was added thereto, and the mixture was further stirred and kneaded until a coherent and uniform dough state was obtained. The coherent dough was formed to a dough having a diameter of 6 cm and a thickness of 2 cm, both sides were baked on an iron plate at 220°C, each side for 90 seconds, then further baked using a convection oven (TSCO-6EDN manufactured by Tanico Corporation) under conditions of 150°C and a vapor of 100% for 10 minutes to obtain a meat-like food of the present invention.

### [Table 2]

**Table 2**

| Raw material name | Product name (manufacturer) | Blending proportion (wt.%) |
|---|---|---|
| Granular soy protein | "NEW FUJINIK 43N" manufactured by Fuji Oil Co., Ltd. | 16.5 |
| Rehydration water | | 33 |
| Onion powder | manufactured by S&B Inc. | 3 |
| Heavy soy sauce | manufactured by Kikkoman Soy Sauce Corporation 2022.10 | 3 |
| Superior white sugar | "Superior White Sugar" manufactured by Spoon Jirushi sha | 1 |
| Yeast extract | "Yeast Extract 21-TF" manufactured by Fuji Foods Corporation | 0.8 |
| Common salt | - | 0.2 |
| Emulsion curd | Mixture of 3.0% of methylcellulose (manufactured by Shin-Etsu Chemical Co., Ltd.), 11.0% of rapeseed oil, 11.0% of isolated soy protein (manufactured by Nisshin OilliO Group, Ltd.), and 75.0% of cold water | 37.5 |
| Modifier for meat-like food | | 5 |

### Evaluation of Meat-Like Food

The prepared meat-like food was subjected to sensory evaluation by five expert panelists for three points of texture (preferred coherence), juiciness, and tenderness, and judged based on the following criteria. The results are shown in Table 3.

### Evaluation Criteria for Texture, Juiciness, and Tenderness

∘: All five expert panelists answered "good".
Δ: Three or four of the five expert panelists answered "good", and one or two answered "slightly poor".
×: Three or more of the five expert panelists answered "poor".

### Comparative Example 1

A meat-like food was prepared by the same procedure as in Example 1 except that a plant oil and fat having a property of being solid at 10°C and not containing an emulsifier ("Botanova" manufactured by Miyoshi oil & fat Co., Ltd.) was used instead of the modifier for a meat-like food and was evaluated in the same manner.

The crystal size and viscosity at 15°C measured for the plant oil and fat used and the evaluation results of the prepared meat-like food are shown in Table 3. In addition, the crystalline state is shown in FIG. 1.

### [Table 3]

**Table 3**

| | | Example 1 | Comparative Example 1 |
|---|---|---|---|
| Crystal size (µm) | | 13.44 | 4.95 |
| Viscosity (mPa·s) at 15°C | | 7560.7 | 49438.0 |
| Evaluation results of meat-like food (*) | Tenderness | ○ | × |
| | Juiciness | ○ | × |
| | Meat-like texture | ○ | × |

| | | | |
|---|---|---|---|
| *Crystal size of the emulsifier for Example 1. Crystal size of the oil and fat for Comparative Example 1. | | | |

### Examples 2 to 7

### Preparation of Modifiers

Modifiers for a meat-like food were prepared in the same manner as in Example 1 according to the blending proportions shown in Table 4 below. The crystal sizes of the emulsifiers of the resulting modifiers for a meat-like food were measured. The results are shown in Table 4. In addition, each crystalline state in Examples 2 to 7 is shown in FIG. 1.

### Preparation of Foods

Meat-like processed foods containing a soy protein and a pea protein were prepared in the following manner in the blending proportions shown in Table 5 below using the modifiers for a meat-like food produced above.

The soy protein was allowed to absorb water using water three times by weight of the soy protein and then loosened using a stirrer. The pea protein, a modifier for a meat-like food, and the remaining water were uniformly mixed by stirring using a stirrer. The loosened soy protein, the uniformly mixed composition described above, an egg white powder, common salt, and glucose were added, and the mixture was further stirred and kneaded until a coherent and uniform dough state was obtained. The coherent dough was formed into a bite-size piece and baked at 130°C for 30 minutes using superheated steam to obtain a meat-like food of the present invention.

### Evaluation of Meat-Like Foods

The prepared livestock meat-like foods were subjected to sensory evaluation for two points of meat-like elasticity and juiciness. The sensory evaluation was carried out by 10 expert panelists, where the livestock meat-like foods were rated in comparison with a control, and those perceived as good were scored +1, those with no change were scored 0, and those perceived as poor were scored -1.

Total sum values of the scoring results by the expert panelists are listed in Table 6. The highest score would be 10 points, those with no change from the control would be 0 points, and the lowest score would be -10 points.

The control was a meat-like food prepared in the same manner as in Example 2 using a plant oil and fat (canola oil) in the formulation shown in Table 5 instead of the modifier for a meat-like food.

### Comparative Example 2

A modifier for a meat-like food of a comparative example was obtained by cooling a solution having the blending proportions shown in Table 4 to 48°C with stirring. A meat-like food was prepared in the same manner as in Example 2 using this modifier for a meat-like food and was evaluated in the same manner.

The crystal size of the emulsifier measured for this modifier for a meat-like food is shown in Table 4, and the crystalline state is shown in FIG. 1. In addition, the evaluation results of the prepared meat-like food are shown in Table 6.

### [Table 4]

**Table 4**

| Raw material name | Blending proportion (wt.%) | | | | | | | |
|---|---|---|---|---|---|---|---|---|
| | Example 2 | Example 3 | Example 4 | Example 5 | Example 6 | Example 7 | Comparative Example 2 | Control |
| Rapeseed oil | 89.8 | 89.8 | 90 | 90 | 90 | 90 | 89.8 | 100 |
| Monoglycerol fatty acid ester | 4 | 4 | 10 | 0 | 0 | 0 | 4 | 0 |
| Propylene glycol fatty acid ester | 6 | 6 | 0 | 10 | 0 | 0 | 6 | 0 |
| Succinic acid monoglycerol fatty acid ester | 0 | 0 | 0 | 0 | 10 | 0 | 0 | 0 |
| Sucrose fatty acid ester | 0 | 0 | 0 | 0 | 0 | 10 | 0 | 0 |
| Lecithin | 0.2 | 0.2 | 0 | 0 | 0 | 0 | 0.2 | 0 |
| Average crystal size (µm) | 9.76 | 31.77 | 13.63 | 24.27 | 45.25 | 51.17 | 270.43 | - |
| Maximum crystal size (µm) | 32.51 | 51.3 | 22.4 | 100.47 | 93.38 | 130.46 | 506.22 | - |
| Minimum crystal size (µm) | 2.04 | 14.43 | 6.62 | 8.49 | 12.38 | 18.24 | 115.77 | - |

### [Table 5]

**Table 5**

| Raw material name | Product name (manufacturer) | Blending proportion (wt.%) | | | | | | | |
|---|---|---|---|---|---|---|---|---|---|
| | | Control | Example 2 | Example 3 | Example 4 | Example 5 | Example 6 | Example 7 | Comparative Example 2 |
| Soy protein | "Miracle Meat FBL" manufactured by DAIZ Inc. | 17.1 | 17.1 | 17.1 | 17.1 | 17.1 | 17.1 | 17.1 | 17.1 |
| Pea protein | "NURRALYS S85F" manufactured by Roquette Japan K.K. | 3.5 | 3.5 | 3.5 | 3.5 | 3.5 | 3.5 | 3.5 | 3.5 |
| Egg white powder | - | 6.4 | 6.4 | 6.4 | 6.4 | 6.4 | 6.4 | 6.4 | 6.4 |
| Common salt | - | 0.6 | 0.6 | 0.6 | 0.6 | 0.6 | 0.6 | 0.6 | 0.6 |
| Glucose | - | 0.4 | 0.4 | 0.4 | 0.4 | 0.4 | 0.4 | 0.4 | 0.4 |
| Water | - | 65.1 | 65.1 | 65.1 | 65.1 | 65.1 | 65.1 | 65.1 | 65.1 |
| Modifier for meat-like food | - | 0 | 6.9 | 6.9 | 6.9 | 6.9 | 6.9 | 6.9 | 6.9 |
| Plant oil and fat | Canola oil | 6.9 | 0 | 0 | 0 | 0 | 0 | 0 | 0 |

### [Table 6]

**Table 6**

| | | Example 2 | Example 3 | Example 4 | Example 5 | Example 6 | Example 7 | Comparative Example 2 |
|---|---|---|---|---|---|---|---|---|
| Evaluation results of meat-like food (*) | Meat-like elasticity | 2.2 | 3.3 | 3.3 | 4.4 | 4.4 | 6.7 | 0.0 |
| | Juiciness | 4.4 | 5.6 | 3.3 | 4.4 | 5.6 | 3.3 | -2.2 |

The above results show that the meat-like food in which the modifier for a meat-like food of the present invention is used is excellent in meat-like texture, juiciness, and the like.

Although the present invention has been described in detail with reference to specific embodiments, it will be apparent to those skilled in the art that various modifications can be made without departing from the spirit and scope of the present invention.

The present application is based on JP 2022-072542 filed on April 26, 2022, which is incorporated herein by reference in its entirety.

## Claims

1. A modifier for a meat-like food comprising:
a plant oil and fat having a property of being in a liquid state at 10°C, and
a fatty acid ester as an emulsifier,
wherein the emulsifier has a crystal size of 0.1 to 250 µm.

2. A modifier for a meat-like food comprising:
a plant oil and fat having a property of being in a liquid state at 10°C, and
a fatty acid ester as an emulsifier,
wherein the modifier has a viscosity at 15°C of 1000 to 30000 mPa·s.

3. The modifier for a meat-like food according to claim 1 or 2, wherein the fatty acid ester contains a glycerol fatty acid ester and a fatty acid ester of a polyhydric alcohol other than glycerin.

4. The modifier for a meat-like food according to claim 3, wherein the fatty acid ester contains the glycerol fatty acid ester and the fatty acid ester of a polyhydric alcohol other than glycerin at a weight ratio of 10:90 to 90: 10.

5. The modifier for a meat-like food according to claim 1 or 2, wherein the modifier further contains a phospholipid.

6. The modifier for a meat-like food according to claim 1 or 2, wherein the meat-like food contains no animal protein or contains an animal protein at a weight ratio of 1.0 or less with respect to a plant protein.

7. The modifier for a meat-like food according to claim 1 or 2, wherein the modifier is a texture improver for a meat-like food.

8. The modifier for a meat-like food according to claim 1 or 2, wherein the modifier is a juiciness improver for a meat-like food.

9. A meat-like food comprising the modifier for a meat-like food according to claim 1 or 2.
